# EUROPEAN PATENT APPLICATION

(11) **EP 2 630 892 A1**
(43) Date of publication of application: **28.08.2013**
(21) Application number: 13153979.3
(22) Date of filing: 05.02.2013
(51) Int. Cl.: A47B 13/08, B60N 3/00

(54) **Two-way shifting device for tables**

(30) Priority: 09.02.2012 IT PI20120018
(71) Applicant: ST.LA.Srl, 56025 Pontedera (PI) (IT)
(72) Inventor: Zappolini, Stefano, 56020 Montopoli V.A. (PI) (IT)
(74) Representative: Leotta, Antonio

(57) **Abstract**

In a table, in particular for camper vans or other vehicles for recreational activities, a support device having linear guides allows to move the top of the table in two directions orthogonal to each other and lying in the plane parallel to the top of the table. A device for locking the sliding movement includes brake assemblies associated to the guides, all of them operated by a single actuating means, associated to one of the brake assemblies.

## Description

### TECHNICAL FIELD

The present invention relates to a two-way shifting device for tables, in particular tables of vehicles for recreational activities, such as camper vans, caravans, yachts, or other pleasure boats, in which the support device includes at least a linear guide, whose sliding member is integral to the leg/s of the table, while the ends of the rail member present, integral therewith, sliding members of a pair of further linear guides, which are arranged orthogonal with respect to the first linear guide and whose rail members are integral to the top of the table, the above mentioned configuration being such to allow the top of the table to slide with respect to its legs in two directions orthogonal to each other, lying in the plane parallel to the top of the table, and in which the device includes means for locking the sliding movement, aimed at preventing the sliding of the first linear guide and at least one of the further linear guides, so as to allow to lock the position of the top of the table with respect to its legs.

### BACKGROUND ART

In the vehicles for recreational activities, such as camper vans, caravans, yachts or other pleasure boats, there is a very real need to optimize the vehicle internal spaces; therefore different types of furniture elements, among which in particular the tables, are provided with moving means, which allows to change their position.

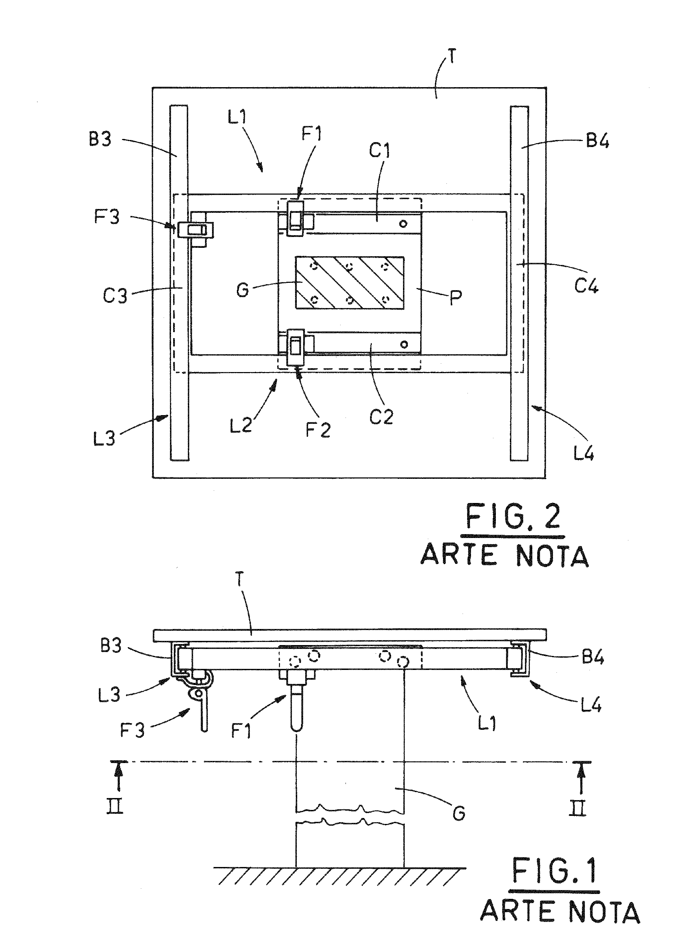

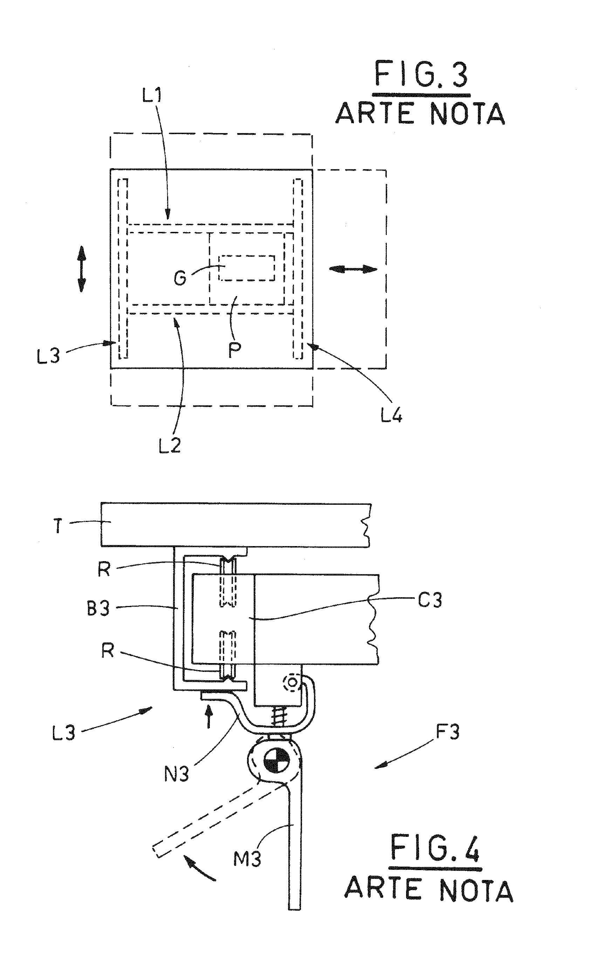

In this field, support devices for tables are known, which allow to move the top of the table with respect to its legs or other support means, that are stationary with respect to the vehicle structure, in two directions orthogonal to each other and lying in the plane parallel to the top of the table. An example of a conventional device of this type is shown in Figures 1 to 4 of the present application. An anchoring plate P of the device is fastened to the leg G of the table by means of 6 screws. Two sliding members C1, C2 of first linear guides L1, L2, parallel to each other, which define a first sliding direction of the top of the table T, are integral to the two opposite sides of the plate P. The rail members B1, B2 of the guides L1 and L2 respectively, are connected one to another, at the respective ends, by means of sliding members C3, C4 of further linear guides L3, L4, orthogonal to the first linear guides L1 and L2. The rail members B3, B4 of the further linear guides L3 and L4 are integral to the top of the table T and define a second sliding direction of the top of the table T. Consequently, the top of the table T can slide with respect to the leg G, as shown in the plan view of Fig. 3, in two directions, orthogonal to each other. The position of the top of the table T with respect to the leg can be locked by means of three identical and independent brake assemblies F1, F2, F3, each acting on one linear guide L1, L2, L3, respectively. As it appears evident, if the system were perfectly rigid, two locking devices, acting on two guides orthogonal to each other, could be enough, however, it is always preferable to provide at least a third locking device. With reference to Fig. 4, a locking device is composed substantially by a braking member N3, operated by a lever M3, by means of a cam geometry. The lever M3 is integral to the sliding member C3 and has the possibility to rotate by approximately 90° about its axis. During rotation, due to its cam geometry, it interacts with the braking member N3, likewise rotatably fastened to the sliding member C3, so as to move it to push against the rail member B3. When the braking member N3 pushes against the rail member B3, the sliding of the sliding member C3 is prevented, for example, by means of its rolling elements R, coupled with the rail member B3.

Conventional locking devices of the above described type have a quite simple structure and consequently, their costs are rather low; however, their operating is not very easy, since it is necessary to operate independently at least three locking devices in order to prevent successfully of the top of the table T from sliding.

### SUMMARY OF INVENTION

Therefore, the object of the present invention is to propose a two-way shifting device for tables, capable of overcoming the above explained limits of the conventional devices.
Another object of the present invention is to propose a two-way shifting device for tables, provided with an optimized system for locking the sliding.

The above mentioned and other objects have been obtained by means of a two-way shifting device for tables according to what has been expressed and characterized in the independent claim.

The dependent claims describe other characteristics of the present invention or variants to the main solution idea.

A two-way shifting device for tables, includes typically at least a linear guide, whose sliding member is integral to the leg/s of the table, while its rail member is integral to the sliding member of at least a further linear guide arranged perpendicular with respect to the first linear guide, the rail member of which is integral to the top of the table, the above mentioned configuration being such to allow the top of the table to slide with respect to its legs in two directions orthogonal to each other, lying in the plane parallel to the top of the table.

Typically, the device includes means for locking the sliding movement, aimed at preventing the sliding of at least a first linear guide and at least one further linear guide, so as to allow to lock the position of the top of the table with respect to its legs. The means for locking the sliding movement includes at least a brake assembly acting on a first linear guide and at least a further brake assembly acting on a further linear guide, orthogonal to the first linear guide.

According to a characteristic aspect of the present subject matter, the first brake assembly includes a braking member operated by respective actuating means and the further brake assemblies are operated by a flexible inextensible drive cable pulled by the actuating means of the first brake assembly.

Due to the presence of the drive cable and the geometry of the brake assemblies, the locking means of the support device of the invention can all be operated at the same time, in an extremely simple and quick way, acting on the actuating means of only one brake assembly. Advantageously, the device includes two of the above mentioned further linear guides mounted at the ends of the first one, orthogonal thereto, and each of them is provided with a brake assembly operated by the above mentioned drive cable stretched between the two further brake assemblies, so as to operate both of them as a result of the pulling action applied thereto, said pulling action being obtained due to the fact that the drive cable is associated to the actuating means of the first brake assembly.

The actuating means of the first brake assembly includes an actuating lever (11) having a cam geometry or, alternatively, it includes a push button with two stable positions, with the drive cable associated to a moveable head member of the above mentioned push button.

### BRIEF DESCRIPTION OF DRAWINGS

These and other characteristics of the invention will become more easily comprehensible from the following description of the preferred embodiments of the invention, given as not limiting examples, with reference to the enclosed figures, in which:
- Figure 1 shows a schematic side view of a table provided with a two-way shifting device of the conventional type;
- Figure 2 shows a section view taken along the line II-II of Figure 1;
- Figure 3 shows a top view of a table provided with a two-way shifting device, in which broken line points out the linear guides of the support device and the positions, which the table can assume due to the guides;
- Figure 4 shows a detail of Figure 1, which points out a brake assembly of a two-way shifting device for tables of conventional type;
- Figure 5 shows a schematic side view of a table provided with a two-way shifting device in accordance with the present invention;
- Figure 6 shows a section view taken along the line II-II of Figure 5; Figure 6A is a section view with the docking means in a release configuration, Figure 6B is a partial section view with the locking means in a configuration, in which it locks any sliding;
- Figure 7 is a partial section view taken along the line VII-VII of Figure 6a; Figure 7A shows a first brake assembly in release configuration, Figure 7B shows the first brake assembly in lock configuration;
- Figure 8 shows a cutaway view of the detail indicated with "K" in Figure 5;
- Figure 9 is a partial section view taken along the line IX-IX of Figure 8;
- Figure 10 is a partial section view taken along the line X-X of Figure 8; Figure 10A shows one of the further brake assemblies in release configuration, Figure 10B shows another brake assembly in lock configuration;

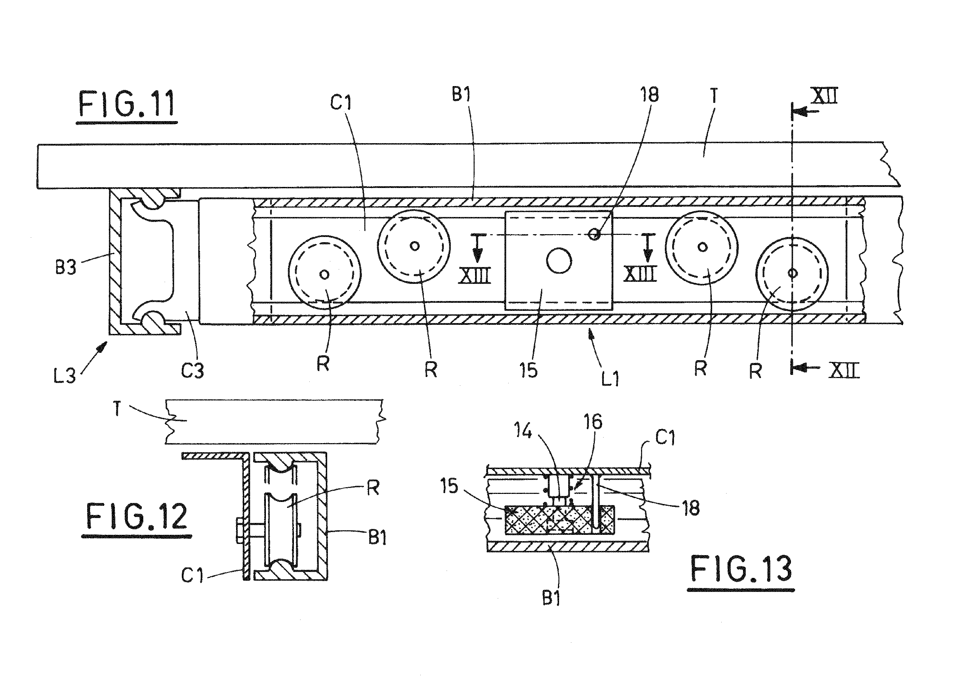

- Figure 11 shows a partial section view taken along the line XI-XI of Figure 7A;
- Figure 12 is a partial section view taken along the line XII-XII of Figure 11;
- Figure 13 is a partial section view taken along the line XIII-XIII of Figure 11;
- shows a section view similar to the one of Figure 7, of a different embodiment of the device according to the invention: Figure 14A shows a first brake assembly according to the invention in release configuration, Figure 14B shows the first brake assembly in lock configuration;

In order to facilitate the comprehension, identical reference numerals have been used, where possible, to identify substantially identical common elements in the figures.

### DESCRIPTION OF EMBODIMENTS

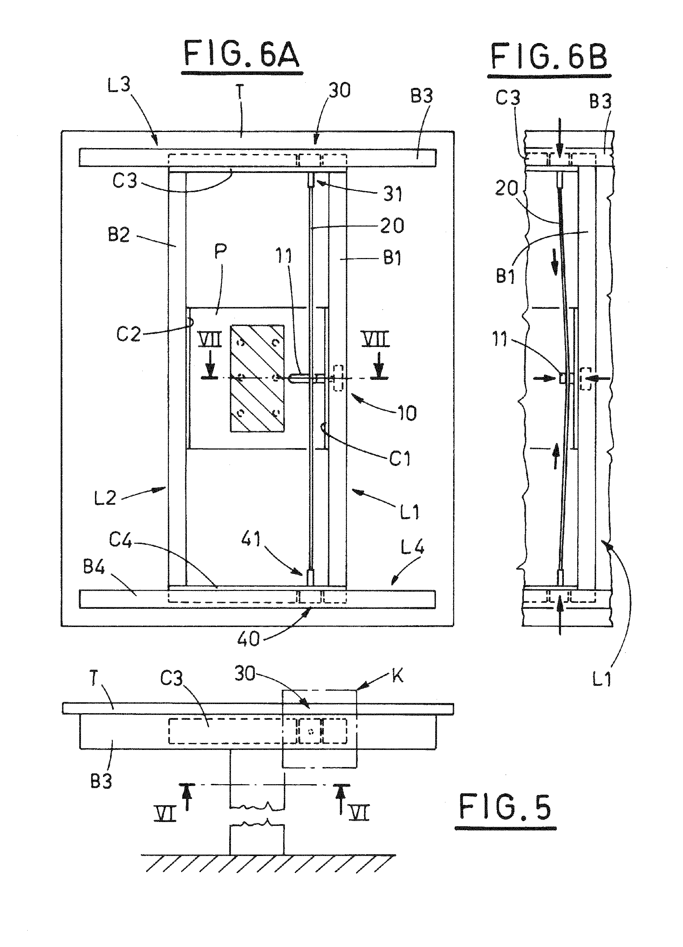

With reference to Figures 5 and 6, according to a preferred embodiment of a support device in accordance with the present invention, an anchoring plate P of the device is fastened by means of six screws to the only leg G, which is fastened to the floor and supports a top of the table T. The plate P is secured, at its opposite ends, to two linear guides L1, L2, parallel to each other. In particular, the plate P is integral to the sliding members C1, C2, of the linear guides L1 and L2, respectively. The rail members B1, B2 are connected one to another at the respective ends by means of the sliding members C3, C4 of further linear guides L3, L4, orthogonal to the first linear guides L1 and L2. The rail members B3, B4 of the further linear guides L3 and L4 are integral to the top of the table T. The linear guides L1 and L2 define a first sliding direction of the top of the table T and the linear guides L3 and L4 define a second sliding direction of the top of the table T with respect to the leg G. The linear guides L1, L2, L3 and L4 substantially form a bi-dimensional kinematic system lying in a plane parallel to the top of the table T and having two degrees of freedom consisting of two translational motions orthogonal to each other.

The position of the top of the table T with respect to the leg is locked by locking means comprising a first brake assembly 10, acting on a first linear guide L1 and two further brake assemblies 30, 40, acting on the two linear guides L3 and L4, respectively, orthogonal to the first one. The two further brake assemblies 30 and 40 are connected by means of a flexible, inextensible drive cable 20, stretched therebetween. As it is well seen in Figure 6B, the shift of the actuating means 11 of the first brake assembly 10 towards the lock configuration pulls the drive cable 20, thus moving also the two further brake assemblies 30 and 40 to the lock configuration.

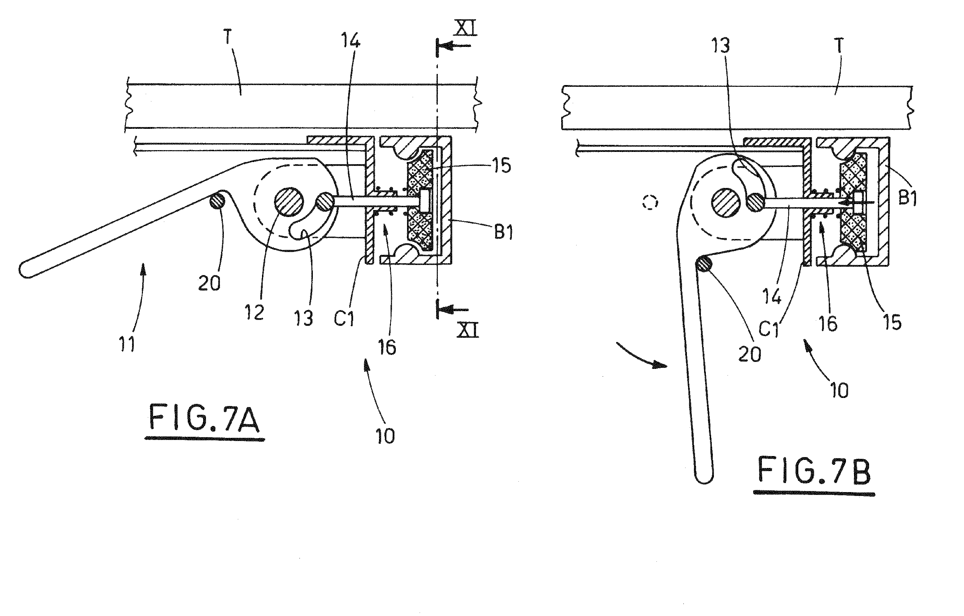

A preferred embodiment of the first brake assembly is shown in Figures 7A and 7B, in the release and lock configurations, respectively. The first brake assembly includes an actuating lever 11, which oscillates between the release position and the lock position about a rotation pin 12, integral to the sliding member C1. Through a slot 13, the lever 11 moves horizontally an actuating pin 14, connected to a braking member 15, which, while in the lock position, pushes against the inner walls of the rail member B1, thus preventing the movement of the sliding member by virtue of the friction forces that are generated. A resilient element 16, interposed between the sliding member C1 and the braking member 15 tends to bring back and keep the latter in the release position, when the lever 11 is in the release configuration. Furthermore, Figures 7A and 7B show very well the shift of the drive cable 20, which passes through the lever movement area, when the actuating lever 11 is brought from the release configuration to the lock configuration.

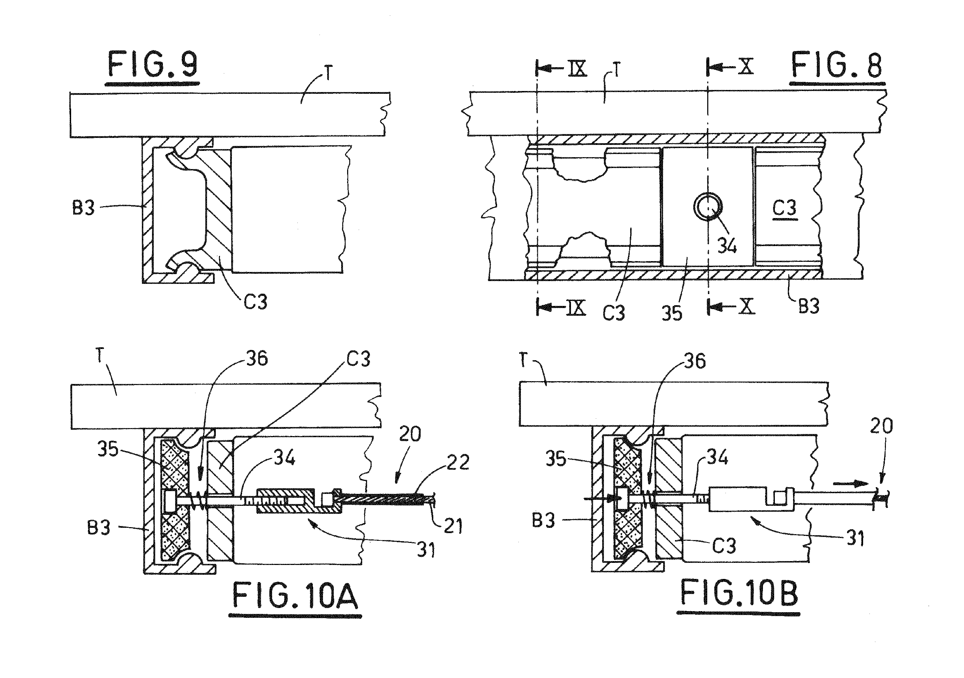

Figures from 8 to 10 show the structure and operation of the further brake assemblies 30 and 40. The drive cable 20, consisting of a flexible and inextensible metallic cable 21 protected by a sheath 22, is hooked at the end of a tension adjusting element 31, into which an actuating pin 34 is screwed, connected to a braking member 35, having form and operation similar to the braking member 15 of the first brake assembly 10. As a result of the pulling action of the drive cable 20, which occurs when the actuating means 11 of the first brake assembly 10 is brought from the release configuration to the lock configuration (see Figure 7), the actuating pin 34 slides horizontally in the slot of the sliding member C3, in which it is housed, bringing the braking member 35 to push against the inner walls of the rail member B3 and thus locking the sliding of the guide L3. The tension of the drive cable 20 can be adjusted by screwing or unscrewing the actuating pin 34 in the adjusting element 31. A resilient element 36 subjected to compression between the sliding member C3 and the resilient element 35, tends to bring back and keep the braking member 35 in the release configuration. The section view of Figure 9 shows the form of the sliding member C3 shaped to couple with the inner shape of the rail member B3. As seen in Figure 8, the area of the guide of the sliding member C3 is partially interrupted in correspondence to the housing area of the braking member 35 to allow the latter to work.

The further brake assembly 40 associated to the linear guide L4 has the same structure and works in the same manner as the above described brake assembly 30 and is likewise provided with an adjusting element 41.

Figures from 11 to 13 show better the structure of the first guide L1 and its first brake assembly 10. Four rolling elements R, fastened to the sliding member C1, couple with the inner shaped profile of the rail member B1, allowing the sliding with rolling friction instead of sliding friction as in the case of the guides L3 and L4. A reference pin 18, integral to the sliding member C1, couples with a slot of the braking member 15 to keep it oriented correctly.

The above described brake assemblies are extremely simple and effective and consequently, very cheap. The device is extremely easy to be used by the user and its costs are very contained, due to the fact that the further brake assemblies 30 and 40 are operated by the same actuating means 11 that operates the first brake assembly 10.

Obviously, the above described characteristics and advantages remain unchanged even in presence of modifications or variants of practical-application nature.

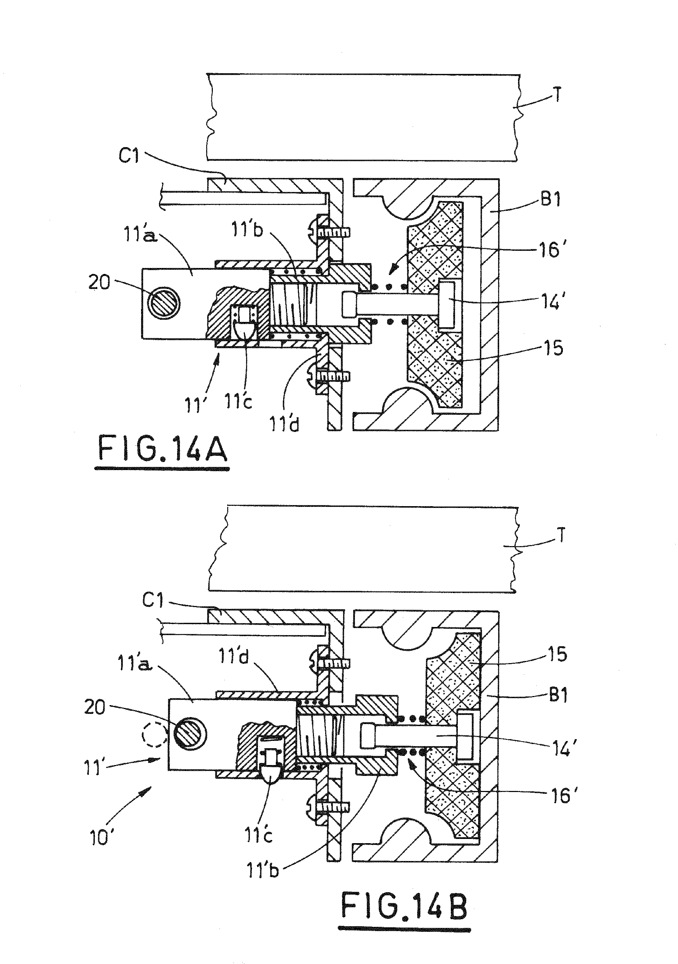

Figure 14 shows a different embodiment of the first brake assembly 10', in which especially the actuating means 11' has been modified. In this embodiment, the actuating means is constituted by a push button with two stable positions: a release position (Figure 7A) and a lock position (Figure 7B). When a head member 11'a of the push button is pushed to the lock position, the braking member 15 is kept pushed against the wall of the rail member B1 by a resilient element 16', which remains compressed between a pushing element 11'b of the push button and the braking member 15. The head member 11'a of the push button 11' features a hole, through which the drive cable 20 is passed and consequently pulled by the movement of the head member 11'a. The return to the release configuration occurs due to the presence of resilient means and as a result of the action on an unlocking element 11'c, which disengages from a suitable housing present in the housing body 11'd of the push button 11'.

Other versions can certainly concern the structure and the geometry of the brake assemblies, since functionally equivalent solutions can be adopted.

Furthermore, the device of the invention could also be provided with only two brake assemblies mounted on the guides, which are orthogonal to each other. In this case, the drive cable 20 could be fastened to another brake assembly 30 at one of its ends, as in the described embodiment, while at the other end it could be fastened to the sliding member C4, so as to be integral thereto.

Also the number of linear guides could be reduced to two, arranged orthogonal to each other, and certainly the connection manner of the guides to the top of the table T and legs G can be changed.

These and other versions or changes could be applied to the locking device for belt lifting apparatuses of the present invention, yet remaining within the protection scope defined by the following claims.

## Claims

1. A two-way shifting device for tables comprising at least a first linear guide (L1) whose sliding member (C1) is integral to the legs (G), of the table, while its rail member (B1) is integral to the sliding member (C3) of at least a further linear guide (L3) arranged perpendicular to said first linear guide (L1), the rail member (B3) being integral to the top (T) of the table, the above layout being such that the top (T) is able to shift with respect to its legs (G) in two perpendicular directions lying in a plane parallel to the top (T) of the table, and in which the support device comprises locking means for preventing sliding movements, aimed at preventing the sliding movement of said first linear guide (L1) and said at least one further linear guide (L3), so that the position of the plane (T) with respect to its legs (G) is locked, **characterized in that** said locking means for preventing the sliding movement comprise
- at least a first brake assembly (10) acting on said first linear guide (L1), said first brake assembly being provided with a braking member (15) and actuating means (11), and
- at least a further brake assembly (30) for acting on a further linear guide (L3) perpendicular to said first linear guide (L1), said further brake assembly (30) being provided with a braking member (35) operated by pulling a flexible inextensible drive cable (20) pulled by the actuating means (11) of said first brake assembly (10).

2. A two-way shifting device for tables according to claim 1, **characterized in that** it comprises two further linear guides (L3, L4) mounted perpendicular with respect to said at least one first linear guide (L1), at the ends thereof, and two further brake assemblies (30, 40), one for each of said further linear guides (L3, L4), said drive cable (20) being stretched between said further brake assemblies (30, 40) for actuating them both when it is pulled.

3. A two-way shifting device for tables according to the previous claim, **characterized in that** said actuating means of said first brake assembly (10) comprises a cam shaped actuating lever (11).

4. A two-way shifting device for tables according to claim 1 or 2, **characterized in that** said actuating means of said first brake assembly (10) comprises a push-button (11') with two stable positions, said drive cable (20) being connected to a moveable head member (11'a) of said push button (11').

5. A two-way shifting device for tables according to any of the preceding claims, **characterized in that** each of said brake assemblies (10, 30, 40) is integral to the sliding member (C1, C3, C4) of a respective linear guide (L1, L3, L4), the braking member (15, 35) being arranged for being pressed against said rail (B1, B3, B4) of the respective linear guide for preventing its sliding movement.

6. A two-way shifting device for tables according to any of the preceding claims, **characterized in that** said drive cable (20) is provided with at least a tension adjusting device (31, 41).
